# EUROPÄISCHE PATENTANMELDUNG

(11) **EP 1 107 617 A2**
(43) Veröffentlichungstag der Anmeldung: **13.06.2001**
(21) Anmeldenummer: 00123674.4
(22) Anmeldetag: 30.10.2000
(51) Int. Cl.: H04Q 7/22

(54) **Verfahren zur Übertragung einer Textnachricht**

(30) Priorität: 06.12.1999 DE 19958707
(71) Anmelder: SIEMENS AKTIENGESELLSCHAFT, 80333 München (DE)
(72) Erfinder: Maierhoefer, Dietmar, 81241 München (DE)

(57) **Zusammenfassung**

Verfahren zur Übertragung einer Textnachricht von einem ersten zu einem zweiten Mobilfunk-Endgerät (M1, M2) in einem mit einem Datennetz (IP), insbesondere IP-Netz, verknüpften Mobilfunknetz, wobei die eingegebenen Daten zusammen mit der Rufnummer sowie einer Datennetzadresse des ersten Mobilfunk-Endgerätes (M1) an einen zugehörigen Dienststeuerknoten (SCP) im Mobilfunk-/Datennetz (IP) zur Prüfung des Speicherinhaltes sowie Ausführung einer Abbuchung und zur Weiterleitung der Textnachricht geleitet werden.

## Beschreibung

Die Erfindung betrifft ein Verfahren zur Übertragung einer Textnachricht nach dem Oberbegriff des Anspruchs 1 bzw. nach dem Oberbegriff des Anspruchs 5.

Während in den Anfangsjahren der Mobilfunktechnik nahezu ausschließlich die Sprachübertragung von Bedeutung war, gewinnt derzeit die Übertragung von Texten schnell an Bedeutung. Bereits im Rahmen der etablierten Mobilfunknetze ist die Übertragung von Kurznachrichten mittels SMS (Short Message Service) ein für viele Kunden wesentlicher Dienst, der insbesondere aus Gebührengründen trotz der relativ unbequemen Handhabung gern genutzt wird. Im Zusammenhang mit der Einführung des mobilfunkspezifischen Internet-Protokolls WAP (Wireless Application Protocol) eröffnen sich für die Textübertragung sprunghaft erweiterte Möglichkeiten und Nutzeffekte. Der über WAP mögliche Internet-Zugriff macht das entsprechend konfigurierte Mobilfunk-Endgerät zu einem wichtigen Informationsinstrument, wobei die zusätzliche Funktionalität mittels Textübertragung realisiert wird.

Ein weiterer wichtiger Trend in der Mobilfunktechnik ist die verstärkte Nutzung von im voraus bezahlten Guthaben, sog. Prepaid-Guthaben oder -Konten. Bei diesen Tarifen wird keine Grundgebühr berechnet, sondern es werden nur die tatsächlich realisierten Verbindungen bezahlt. Allerdings sind für Nutzer von Prepaid-Guthaben nicht sämtliche Dienstmerkmale der Mobilfunknetze verfügbar. Insbesondere können nach dem derzeitigen Stand die Nutzer von Prepaid-Guthaben keine Kurzmitteilungen per SMS versenden, da diese nicht durch den Netzbetreiber vergebührt werden können. Dies betrifft auch Besitzer von WAP-fähigen Mobilfunk-Endgeräten. Für diese entstehen auch Einschränkungen hinsichtlich des aus dem Internet abrufbaren Informationsangebots, sofern das Endgerät mit einem Prepaid-Guthaben betrieben werden soll.

Der Erfindung liegt daher die Aufgabe zugrunde, ein verbessertes gattungsgemäßes Verfahren zur Übertragung einer Textnachricht anzugeben, das die Textübertragung auch im Prepaid-Modus der Nutzung des Mobilfunknetzes ermöglicht.

Diese Aufgabe wird gemäß einem ersten Aspekt der Erfindung gelöst durch ein Verfahren mit den Merkmalen des Anspruchs 1 und gemäß einem zweiten Aspekt der Erfindung durch ein Verfahren mit den Merkmalen des Anspruchs 5.

Die Erfindung schließt den grundlegenden Gedanken ein, vor der Übertragung einer Textnachricht eine Guthabenprüfung sowie - bei ausreichendem Guthaben - Abbuchung von einem Prepaid-Guthaben eines Mobilfunkteilnehmers beim entsprechenden Dienststeuerknoten auszuführen. Es wird nur dann eine Textübertragung ausgeführt, wenn ein ausreichendes Guthaben verifiziert wurde.

Gemäß ihrem ersten Aspekt schließt die Erfindung weiter den grundsätzlichen Gedanken ein, eine zu übertragende Textnachricht und die Rufnummer des Adressaten in eine Übertragungsmaske einzutragen, die zur Übertragung an einen Anwendungs-Server des mit einem Datennetz verknüpften Mobilfunknetzes und zur Handhabung in diesem ausgebildet ist. Die beim Versuch der Übermittlung der Textnachricht mit dieser Übertragungsmaske mitgeführte IP-Adresse des Absenders ermöglicht die Zuleitung der Übertragungsmaske zu demjenigen Dienststeuerknoten, bei dem das Prepaid-Konto des Absenders geführt wird. Nachdem das Guthaben dort geprüft und im positivem Falle eine Abbuchung vorgenommen wurde, wird die Textnachricht über ein Textübertragungs-Dienstzentrum des Netzes dem Adressaten zugestellt.

Gemäß ihrem zweiten Aspekt schließt die Erfindung weiterhin den Gedanken ein, eine von einem Informationsanbieter ausgesandte Textnachricht über den (speziell als "WTA(Wireless Telefony Application) -Server" bezeichneten) Anwendungs-Server sowie - in diesem Fall - den Dienststeuerknoten zu lenken, bei dem das Prepaid-Konto des Adressaten geführt wird. Dort wird dann geprüft, ob der Adressat ein ausreichendes Guthaben hat, und bei positivem Prüfungsergebnis wird eine entsprechende Abbuchung ausgeführt. Anschließend kann ihm über ein Textübertragungs-Dienstzentrum (im Falle einer SMS speziell das SMSC = Short Message Service Center) die Textnachricht zugestellt werden.

Bei beiden grundsätzlichen Ausführungen werden vorteilhafterweise die Möglichkeiten des WAP genutzt.

In einer weiteren vorteilhaften Ausführung kann neben dem eigentlichen Text und der Rufnummer des Adressaten bei der Eingabe zugleich die Art der Textübertragung spezifiziert werden, und nachfolgend wird in Abhängigkeit von dieser Eingabe beispielsweise das SMS-, E-Mail- oder Faxformat gewählt und die Nachricht über einen entsprechenden Gateway des Mobilfunksystems geleitet.

Die erwähnte Übertragungsmaske hat insbesondere die Form einer sog. WML(Wireless Markup Language)-Startseite, die entweder durch den Absender über sein Mobilfunk-Endgerät aus dem WTA-Server angefordert werden kann und ihm dann mittels Push-Mechanismus zugestellt wird oder im Endgerät gespeichert sein kann.

In einer vorteilhaften Ausführung wird für den Absender (Originator) eine hinreichend aussagekräftige Rückmeldung erzeugt und ihm zugestellt, beispielsweise die Rückmeldung, daß der adressierte B-Teilnehmer nicht existiert oder die Meldung, daß die Textnachricht mangels ausreichenden Guthabens nicht zugestellt werden konnte oder die Mitteilung, wann die Nachricht übermittelt wurde.

In einer weiteren vorteilhaften Ausführung ist die Einrichtung von Verteilerlisten und deren Verwaltung auf dem Anwendungs-Server (WTA-Server) vorgesehen, wobei nach erfolgter Einrichtung durch den Absender lediglich noch ein vorbestimmter Verteiler spezifiziert werden muß und dann durch den WTA-Server/Dienststeuerknoten bzw. das Textübertragungs-Dienstzentrum (SMSC) die Verteilung der Nachrichten übernommen wird.

In zweckmäßigen Ausführungen gemäß dem zweiten Aspekt der Erfindung können auf bequeme Weise Informationsdienste abonniert/subskribiert werden, wobei der Interessent im Rahmen seines Prepaid-Guthabenkostenlimits für Textnachrichten allgemein und/oder mit Absenderbezug einstellen kann. Es ist zudem möglich, Absender zu spezifizieren, von denen keine (entgeltlichen) Informationen gewünscht werden. Diese Möglichkeiten werden über eine rufnummern- bzw. IP-adressbezogene Verwaltung von Teilbeträgen des Prepaid-Guthabens realisiert.

Die vorgeschlagene Lösung ermöglicht in vorteilhafter Weise auch das International Roaming bei der Übertragung von Textnachrichten auf Prepaid-Basis.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 eine schematische Darstellung zur Erläuterung eines Ausführungsbeispiels zum ersten Aspekt der Erfindung und
Fig. 2 eine schematische Darstellung zur Erläuterung eines Ausführungsbeispiels zum zweiten Aspekt der Erfindung.

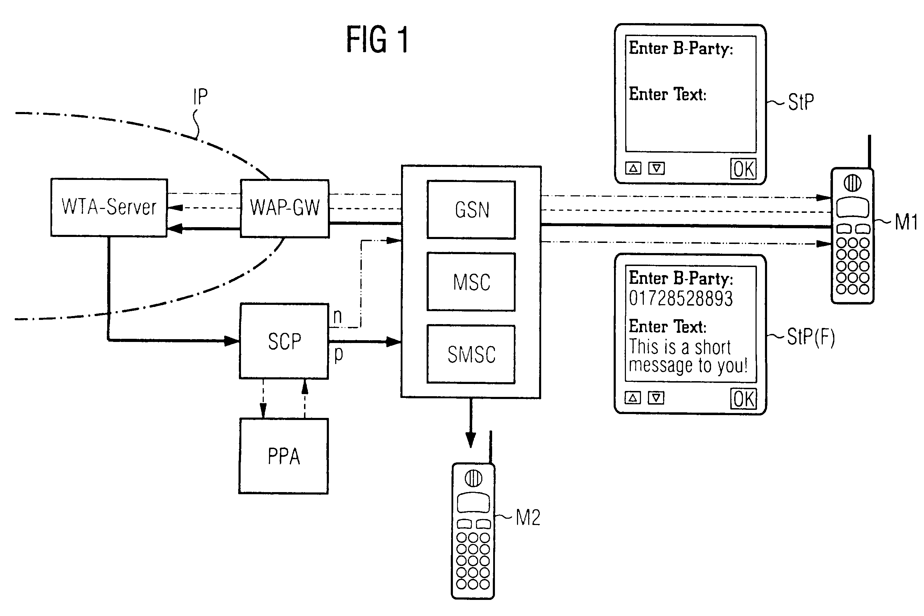

Fig. 1 zeigt als Prinzipdarstellung den Ablauf der Übertragung einer Kurzmitteilung per SMS von einem ersten Mobilfunk-Endgerät M1, welches auf der Basis eines Prepaid-Guthabens PPA betrieben wird, zu einem zweiten Mobilfunk-Endgerät M2 in einer einfachen Ausführung.

Der Besitzer des ersten Mobilfunk-Endgeräts M1 will eine SMS an den Besitzer des zweiten Mobilfunk-Endgeräts M2 senden, die ihm auf seinem Prepaid-Guthaben belastet werden soll. Er fordert mit einem (in der Figur gestrichelt gezeichneten) Anforderungssignal die WML-Startseite vom Anwendungs-Server WTA-Server des verknüpften Mobilfunk-/IP-Netzes an und erhält die Startseite StP per Push-Mechanismus zugestellt. Er gibt die Rufnummer des Adressaten und den Text der Kurzmitteilung ein und schickt die ausgefüllte Startseite StP(F) ab.

Diese wird (was in der Figur mit einem fett durchgezogenen Pfeil verdeutlicht ist) über einen Wireless Application Protocol Gateway WAP-GW an den Anwendungsserver WTA-Server übermittelt und von diesem auf der Grundlage der IP-Adresse des ersten Mobilfunk-Endgerätes M1, die beim Absenden der Nachricht automatisch mit übertragen wird, an denjenigen Dienststeuerknoten SCP des Mobilfunknetzes weitergeleitet, bei dem ein dem ersten Mobilfunk-Endgerät Ml zugeordneter Prepaid-Kontospeicher PPA etabliert ist.

Beim Dienststeuerknoten SCP wird ein (in der Figur durch 2 kurze gestrichelte Pfeile verdeutlichter) Guthabenprüfungsund Abbuchungsvorgang ausgelöst und ausgeführt. Bei negativem Prüfungsergebnis, d. h. wenn kein ausreichendes Guthaben vorhanden ist (in der Figur mit den Buchstaben "n" gekennzeichnet), wird die Kurzmitteilung nicht zugestellt, sondern einin der Figur mit einer doppeltstrichpunktierten Linie gekennzeichnetes - Abbruchsignal zurück an das erste Mobilfunk-Endgerät M1 übermittelt. Bei positivem Prüfungsergebnis (in der Figur mit dem Buchstaben "p" gekennzeichnet) wird die Kurzmitteilung an ein Textübertragungs-Dienstzentrum SMSC übermittelt und von diesem dem zweiten Mobilfunk-Endgerät M2 zugestellt.

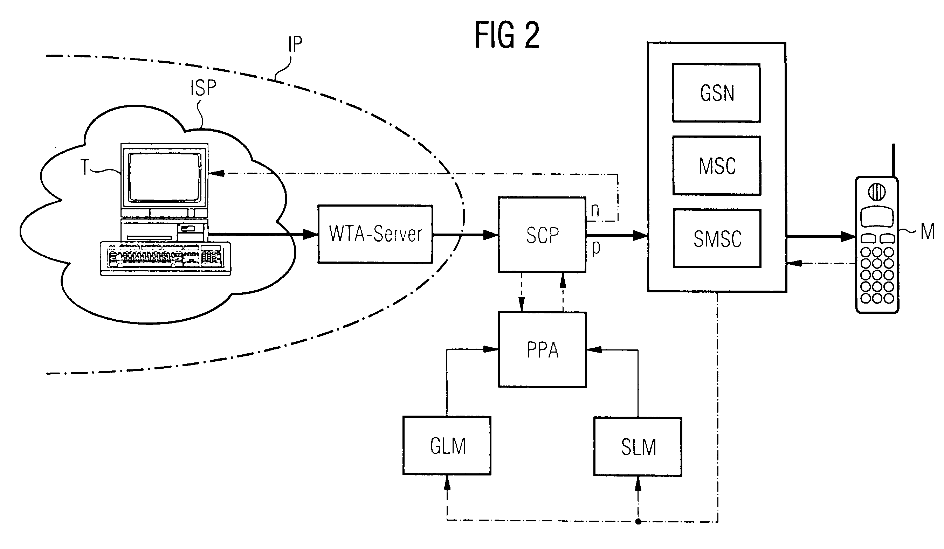

In Fig. 2 ist eine modifizierte Anordnung zur Zustellung von sog. Terminating Short Messages im Rahmen eines internet-basierten Informationsdienstes skizziert.

Ein Informationsanbieter ISP in einem IP-Netz IP übermittelt von einer Sendeeinrichtung (einem PC) T aus entgeltliche Informationen an Bezieher eines Informationsdienstes. Einer der Bezieher nutzt zum Empfang der Informationen ein WAP-fähiges Mobilfunk-Endgerät M, welches auf der Grundlage eines Prepaid-Guthabens betrieben wird, das in einem Prepaid-Kontospeicher PPA bei dem Dienststeuerknoten SCP gehandhabt wird.

Von der Sendeeinrichtung T aus wird eine Textnachricht zunächst zu einem WTA-Server im IP-Netz und von diesem auf der Grundlage der vom Absender eingegebenen IP-Adresse des Mobilfunk-Endgerätes M zu dem Dienststeuerknoten SCP geleitet, dem der Prepaid-Kontospeicher PPA des Adressaten zugeordnet ist. Dem Prepaid-Kontospeicher PPA sind bei der gezeigten Ausführung ein Globallimit-Speicher GLM und ein Speziallimit-Speicher SLM zugeordnet, die vom Mobilfunk-Endgerät M aus programmiert werden können. In diesem sind ein für die Vergebührung von Textnachrichten insgesamt bereitstehender Anteil des Prepaid-Guthabens (Globallimit) bzw. für Textnachrichten vorbestimmter Absender reservierte Maximal-Beträge (Speziallimite) gespeichert. Die Limite können über das Endgerät M jederzeit geändert oder gelöscht werden.

Im Dienststeuerknoten SCP wird über entsprechende Vergleichermittel geprüft, ob das Gesamtguthaben für die Zustellung der Nachricht an das Mobilfunk-Endgerät M ausreicht und ob das Globallimit für Textnachrichten und das für den Anbieter ISP gesetzte Speziallimit noch nicht überschritten wird. Bei insgesamt positivem Prüfungsergebnis (das auch hier mit dem Bezugszeichen "p" bezeichnet ist) wird die Textnachricht über ein Textübertragungs-Dienstzentrum SMSC an das Mobilfunk-Endgerät M zugestellt. Bei negativem Ergebnis eines der Vergleichsvorgänge (auch in dieser Figur mit dem Bezugszeichen "n" bezeichnet) wird ein Abbruchanzeigesignal als Rückmeldung an die Sendeeinrichtung T des Anbieters ISP übermittelt.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen.

## Patentansprüche

1. Verfahren zur Übertragung einer Textnachricht von einem ersten zu einem zweiten Mobilfunk-Endgerät (M; M1, M2) in einem mit einem Datennetz (IP), insbesondere IP-Netz, verknüpften Mobilfunknetz, wobei das erste Mobilfunk-Endgerät (M1) zur Kommunikation mit dem Datennetz ausgebildet ist und in einem Prepaid-Modus betrieben wird, mit den Schritten:
(a) Laden einer Übertragungsmaske (StP) im ersten Mobilfunk-Endgerät (M1),
(b) Eingabe der Textnachricht und der Rufnummer des zweiten Mobilfunk-Endgerätes (M2) in die Übertragungsmaske (StP(F)),
(c) Übertragung der Übertragungsmaske (StP(F)) mit den eingegebenen Daten an einen Anwendungs-Server (WTA-Server) des Mobilfunk-/Datennetzes (IP),
(d) Weiterleitung der eingegebenen Daten zusammen mit der Rufnummer bzw. einer Datennetzadresse des ersten Mobilfunk-Endgerätes (M1) an einen zugehörigen Dienststeuerknoten (SCP) im Mobilfunk-/Datennetz (IP), der einen dem ersten Mobilfunk-Endgerät (M1) zugeordneten Prepaid-Kontospeicher (PPA) aufweist
(e) Prüfung des Speicherinhaltes eines Prepaid-Kontospeichers (PPA) sowie Ausführung einer Abbuchung von diesem und Weiterleitung der Textnachricht und Rufnummer des zweiten Mobilfunk-Endgeräts (M2) an ein Textübertragungs-Dienstzentrum (SMSC) des Mobilfunk-/Datennetzes (IP) oder Ausgabe eines Abbruchanzeigesignals an das erste Mobilfunk-Endgerät (M1) in Abhängigkeit vom Prüfungsergebnis,
(f) Mobilfunkübertragung des Textes vom Textübertragungs-Dienstzentrum (SMSC) an das zweite Mobilfunk-Endgerät (M2) bei positivem Prüfungsergebnis.

2. Verfahren nach Anspruch 1,
**dadurch gekennzeichnet**, daß
im Schritt (a) eine WML-Startseite (StP) aus einem Speicher des ersten Mobilfunk-Endgeräts (M1) geladen oder auf einen dem Schritt (a) vorangehenden Abfrageschritt vom Textübertragungs-Dienstzentrum (SMSC) an das erste Mobilfunk-Endgerät (M1) übertragen wird.

3. Verfahren nach Anspruch 1 oder 2,
**gekennzeichnet durch**
einen Schritt
(g) Generierung und Übermittlung einer Übertragungsbestätigungs-Nachricht oder einer Übertragungsfehler-Nachricht an das erste Mobilfunk-Endgerät (M1), insbesondere ausgelöst vom Textübertragungs-Dienstzentrum (SMSC) des Mobilfunk-/Datennetzes (IP) übertragen und über den dem ersten Mobilfunk-Endgerät (M1) zugeordneten Dienststeuerknoten (SCP).

4. Verfahren nach einem der vorangehenden Ansprüche,
**dadurch gekennzeichnet**, daß
vorab in einem Rufnummernspeicher des Textübertragungs-Dienstzentrums (SMSC) mindestens eine Rufnummerngruppe einer vorbestimmten Mehrzahl von zweiten Mobilfunk-Endgeräten (M2) in Zuordnung zu einem Verteilercode gespeichert wird,
im Schritt (b) anstelle einer einzelnen Rufnummer ein Verteilercode am ersten Mobilfunk-Endgerät (M1) eingegeben und im Schritt (c) an den Anwendungs-Server (WTA-Server) übertragen wird und
im Schritt (f) eine Mobilfunk-Übertragung der Textnachricht an die vorbestimmte Mehrzahl von zweiten Mobilfunk-Endgeräten (M2) selbsttätig ausgeführt wird.

5. Verfahren zur Übertragung einer Textnachricht in einem mit einem Datennetz (IP), insbesondere IP-Netz, verknüpften Mobilfunknetz von einer Sendeeinrichtung (T) eines Informationsanbieters (ISP), welche zur Kommunikation mit dem Datennetz (IP) ausgebildet ist, zu einem Mobilfunk-Endgerät (M), welches in einem Prepaid-Modus betrieben wird, mit den Schritten
(a') Eingabe der Textnachricht und der Rufnummer bzw. Datennetzadresse des Mobilfunk-Endgerätes (M) an der Sendeeinrichtung (T),
(b') Übertragung der Textnachricht und Rufnummer bzw. Datennetzadresse an einen Anwendungs-Server (WTA-Server) des Mobilfunk-/Datennetzes (IP),
(c') Weiterleitung der Textnachricht zusammen mit der Rufnummer bzw. Datennetzadresse des Mobilfunk-Endgeräts (M) an einen zugehörigen Dienststeuerknoten (SCP) des Mobilfunk-/Datennetzes (IP), dem ein Prepaid-Kontospeicher (PPA) des Mobilfunk-Endgeräts (M) zugeordnet ist,
(d') Prüfung des Speicherinhaltes des Prepaid-Kontospeichers (PPA) sowie Ausführung einer Abbuchung vom Prepaid-Kontospeicher (PPA) und Weiterleitung der Textnachricht und Rufnummer an ein Textübertragungs-Dienstzentrum (SMSC) des Mobilfunk-/Datennetzes (IP) oder Ausgabe eines Abbruchanzeigesignals an die Sendeeinrichtung (T) in Abhängigkeit vom Prüfungsergebnis und
(e') Mobilfunk-Übertragung der Textnachricht an das Mobilfunk-Endgerät (M) bei positivem Prüfungsergebnis.

6. Verfahren nach einem der vorangehenden Ansprüche,
**dadurch gekennzeichnet**, daß
die Übertragung der Textnachricht unter dem Wireless Application Protocol ausgeführt wird.

7. Verfahren nach einem der vorangehenden Ansprüche,
**dadurch gekennzeichet**, daß
im Schritt (b) bzw. (a') zusätzlich ein Modus der Textübertragung eingegeben wird und in den nachfolgenden Schritten in Abhängigkeit von dieser Eingabe die Textnachricht im SMS-, E-Mail- oder Faxformat über ein SMS-, E-Mail- oder Fax-Gateway geleitet wird.

8. Verfahren nach einem der Ansprüche 5 bis 7,
**gekennzeichnet durch**
einen Schritt
(f') Generierung und Übermittlung einer Übertragungsbestätigungs-Nachricht oder eine Übertragungsfehler-Nachricht an die Sendeeinrichtung (T), insbesondere ausgelöst vom Textübertragungs-Dienstzentrum (SMSC) des Mobilfunk-/Datennetzes (IP) und übertragen über den dem Mobilfunk-Endgerät (M) zugeordneten Dienststeuerknoten (SCP).

9. Verfahren nach einem der Ansprüche 5 bis 8,
**dadurch gekennzeichnet**, daß
über das Mobilfunk-Endgerät (M) ein Globallimit-Steuersignal an den Dienststeuerknoten (SCP) übermittelt wird, durch das ein Teilbetrag des Prepaid-Guthabens zur Abbuchung für Textnachrichten aller Art freigegeben wird.

10. Verfahren nach einem der Ansprüche 5 bis 9,
**dadurch gekennzeichnet**, daß
über das Mobilfunk-Endgerät (M) mindestens ein Speziallimit-Steuersignal an den Dienststeuerknoten (SCP) übermittelt wird, durch das jeweils ein Teilbetrag des Prepaid-Guthabens in Zuordnung zu jeweils einer vorbestimmten Rufnummer oder Datennetzadresse eines Absenders zur Abbuchung für Textnachrichten von diesem Absender freigegeben wird.

11. Verfahren nach einem der Ansprüche 5 bis 10,
**dadurch gekennzeichnet**, daß
über das Mobilfunk-Endgerät (M) mindestens ein Sperr-Steuersignal an den Dienststeuerknoten (SCP) übermittelt wird, durch das eine Abbuchung vom Prepaid-Guthaben für Textnachrichten mindestens eines vorbestimmten Absenders verhindert wird.
